# EUROPÄISCHE PATENTSCHRIFT

(11) **EP 3 652 019 B1**
(45) Veröffentlichungstag und Bekanntmachung des Hinweises auf die Patenterteilung: **17.07.2024**
(21) Anmeldenummer: 18742442.9
(22) Anmeldetag: 12.07.2018
(51) Int. Cl.: B60N 2/02, B60N 2/06, B60N 2/18

(54) **SITZVERSTELLUNGSMECHANISMUS FÜR EINEN FAHRZEUGSITZ UND FAHRZEUGSITZ**
SEAT ADJUSTMENT MECHANISM FOR A VEHICLE SEAT, AND VEHICLE SEAT
MÉCANISME DE RÉGLAGE DE SIÈGE POUR SIÈGE DE VÉHICULE ET SIÈGE DE VÉHICULE

(30) Priorität: 12.07.2017 DE 102017211968
(43) Veröffentlichungstag der Anmeldung: 20.05.2020
(73) Patentinhaber: KEIPER Seating Mechanisms Co., Ltd., Shanghai, 201315 (CN)
(72) Erfinder: SUBRAMANIAN, Karthikeyan Maharajapuram, 51381 Leverkusen (DE)
(74) Vertreter: Kutzenberger Wolff & Partner
(86) Internationale Anmeldenummer: PCT/EP2018/068887
(87) Internationale Veröffentlichungsnummer: WO 2019/012026

(56) Entgegenhaltungen:
- EP-A1- 0 052 545
- WO-A1-2014/115106
- US-A- 3 071 407

## Beschreibung

Die Erfindung betrifft einen Sitzverstellungsmechanismus für einen Fahrzeugsitz sowie einen Fahrzeugsitz.

Als Stand der Technik sind Sitzverstellungsmechanismen für Fahrzeugsitze sowie Fahrzeugsitze bekannt. Mit einem bekannten Sitzverstellungsmechanismus für einen Fahrzeugsitz ist dessen Position in Längsrichtung, also in x-Richtung, verstellbar. Dazu weist der Fahrzeugsitz eine erste Anzahl von Schienenpaaren, in der Regel zwei Schienenpaare, auf. Jedes Schienenpaar umfasst eine obere Schiene und eine untere Schiene.

Zum Beispiel sind Sitzverstellmechanismen aus der WO 2014/115106 A1 und US 3,071,407 A bekannt.

Aufgabe der vorliegenden Erfindung ist es, einen verbesserten Sitzverstellungsmechanismus der eingangs genannten Art sowie einen verbesserten Fahrzeugsitz anzugeben.

Die Aufgabe wird den Sitzverstellungsmechanismus betreffend mit einem Sitzverstellungsmechanismus für einen Fahrzeugsitz mit den in Anspruch 1 angegebenen Merkmalen gelöst. Den Fahrzeugsitz betreffend wird die Aufgabe mit einem Fahrzeugsitz mit den in Anspruch 8 angegebenen Merkmalen gelöst.

Ein Sitzverstellungsmechanismus für einen Fahrzeugsitz umfasst eine Anzahl erster Schienenpaare, wobei jedes erste Schienenpaar eine obere Schiene und eine untere Schiene umfasst. Erfindungsgemäß ist eine Anzahl zweiter Schienenpaare vorgesehen, welche eine im Wesentlichen gleiche und in Längsrichtung gerichtete Wirkrichtung wie die Anzahl erster Schienenpaare aufweist. Die Anzahl erster Schienenpaare ist gleichzeitig mit der Anzahl zweiter Schienenpaare betätigbar.

Eine im Wesentlichen gleiche Wirkrichtung ist gegeben, wenn sich die Wirkrichtung der Anzahl erster Schienenpaare um weniger als 10° von der Wirkrichtung der Anzahl zweiter Schienenpaare unterscheidet.

Die mit dem erfindungsgemäßen Sitzverstellungsmechanismus erzielten Vorteile bestehen insbesondere darin, dass eine Verstellung der Position des Fahrzeugsitzes in Längsrichtung, also in x-Richtung, besonders schnell erfolgen kann. Dadurch ist es möglich, insbesondere die Zeit zum Positionieren eines Fahrzeugsitzes, insbesondere eines Fahrersitzes, aus einer Komfort-Position, welche beispielsweise während eines Fahrzustandes eines autonom fahrenden Fahrzeugs eingenommen ist, in eine Fahrposition gegenüber herkömmlichen Sitzverstellungsmechanismen deutlich zu verkürzen. Sofern es bei autonom fahrenden Fahrzeugen die Fahrsituation erfordert, ist dadurch der Fahrzeugsitz besonders schnell in Fahrposition bringbar, wodurch der Fahrer schneller wieder eine zum Führen geeignete Sitzposition einnehmen kann. Dadurch kann eine Sicherheit erhöht werden und eine Wahrscheinlichkeit eines Unfalls ist reduzierbar.

Die erfindungsgemäße Ausgestaltung des Sitzverstellungsmechanismus sieht vor, dass zwischen der Anzahl erster Schienenpaare und der Anzahl zweiter Schienenpaare ein Verbindungselement angeordnet ist. Der Sitzverstellungsmechanismus ist dadurch mechanisch besonders stabil.

Das Verbindungselement ist bevorzugt ein- oder mehrteilig ausgebildet, wodurch eine Verbindung zwischen den ersten Schienenpaaren und den zweiter Schienenpaaren besonders stabil und, insbesondere wenn mehrteilig, gleichzeitig besonders gewichtsparend ausbildbar ist.

Das Verbindungselement ist bevorzugt eine Motorbrücke, also ein Bauteil zur Aufnahme einer Anzahl von Elektromotoren.

Die erfindungsgemäße Ausgestaltung des Sitzverstellungsmechanismus sieht ferner vor, dass die unteren Schienen der Anzahl erster Schienenpaare oberseitig am Verbindungselement befestigt und obere Schienen der Anzahl zweiter Schienenpaare unterseitig am Verbindungselement befestigt sind. Dadurch sind auf besonders einfache Weise die ersten Schienenpaare mit den zweiten Schienenpaaren koppelbar und gemeinsam betätigbar.

Die erfindungsgemäße Ausgestaltung des Sitzverstellungsmechanismus sieht weiterhin vor, dass am Verbindungselement eine Anzahl von Motoren, insbesondere Elektromotoren, angeordnet ist, sodass auf einfache Art und Weise die Schienenpaare bevorzugt gleichzeitig betätigbar sind.

Dabei ist ein erster Motor zum elektrischen Antrieb der Anzahl erster Schienenpaare angeordnet und ein zweiter Motor zum elektrischen Antrieb der Anzahl zweiter Schienenpaare angeordnet, wobei der erste Motor oberseitig und der zweite Motor unterseitig am Verbindungselement angeordnet ist, wodurch der Sitzverstellungsmechanismus besonders kompakt und einfach ausbildbar ist.

Eine weitere Ausgestaltung des erfindungsgemäßen Sitzverstellungsmechanismus sieht vor, dass an Enden der oberen Schienen der Anzahl erster Schienenpaare Halterungen zur Aufnahme jeweils eines Schwenkhebels angeordnet sind, wodurch auf einfache Weise sowohl eine Höhenverstellung eines Sitzteils als auch eine zusätzliche Längsverstellung desselben ermöglicht ist. Besonders vorteilhaft ist, dass eine Längsverstellung gleichzeitig, also gemeinsam, mit der Verstellung der Schienenpaare und damit besonders schnell möglich ist.

Ein erfindungsgemäßer Fahrzeugsitz weist einen erfindungsgemäßen Sitzverstellungsmechanismus auf. Vorteilhaft ist, dass eine Verstellung der Position des Fahrzeugsitzes in Längsrichtung besonders schnell erfolgen kann. Dadurch ist es möglich, insbesondere die Zeit zum Positionieren des Fahrzeugsitzes, insbesondere eines Fahrersitzes, aus einer Komfort-Position, welche während eines Fahrzustandes eines autonom fahrenden Fahrzeugs eingenommen ist, in eine Fahrposition gegenüber herkömmlichen Sitzverstellungsmechanismen deutlich zu verkürzen. Sofern es bei autonom fahrenden Fahrzeugen die Fahrsituation erfordert, ist dadurch der Fahrzeugsitz besonders schnell in Fahrposition bringbar, wodurch der Fahrer schneller wieder eine zum Führen geeignete Sitzposition einnehmen kann. Dadurch kann eine Sicherheit erhöht werden und eine Wahrscheinlichkeit eines Unfalls ist reduzierbar.

Ausführungsbeispiele der Erfindung werden anhand von Zeichnungen näher erläutert.

Dabei zeigen:
- Figur 1: schematisch in Seitenansicht einen erfindungsgemäßen Sitzverstellungsmechanismus,
- Figur 2: schematisch eine zugehörige Draufsicht,
- Figur 3: schematisch eine zugehörige Ansicht von vorn,
- Figur 4: schematisch eine weitere zugehörige Seitenansicht mit einem Sitzteil und
- Fig. 5a, 5b: Diagramme von zeitabhängigen Längsverstellungen.

Einander entsprechende Teile sind in allen Figuren mit den gleichen Bezugszeichen versehen.

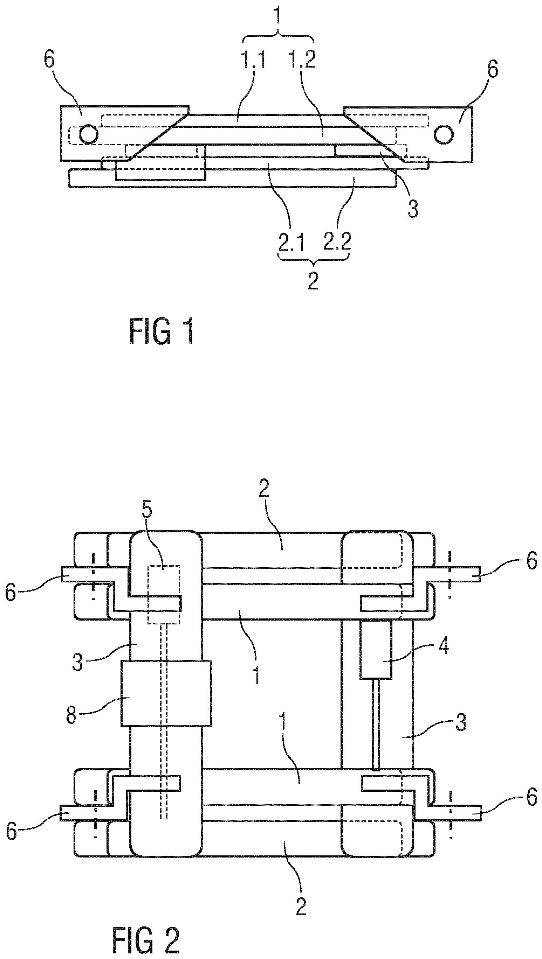

**Figur 1** zeigt schematisch einen Sitzverstellungsmechanismus zur elektrischen Verstellung eines Fahrzeugsitzes in Längsrichtung, also in x-Richtung. Zwei oben angeordnete erste Schienenpaare 1 umfassen je eine obere Schiene 1.1 und eine untere Schiene 1.2. Zwei unten angeordnete zweite Schienenpaare 2 umfassen je eine obere Schiene 2.1 und eine untere Schiene 2.2. Die unteren Schienen 2.2 des zweiten Schienenpaares 2 sind unterseitig an einem Fahrzeugboden befestigt. Die oberen Schienen 2.1 der unten angeordneten zweiten Schienenpaare 2 sind oberseitig mit einem zweiteiligen Verbindungselement 3 verbunden, beispielsweise geschraubt oder geschweißt. Die unteren Schienen 1.2 der oben angeordneten ersten Schienenpaare 1 sind unterseitig mit der Oberseite des Verbindungselements 3 verbunden, beispielsweise geschraubt oder geschweißt. An den Enden der oberen Schienen 1.1 der oben angeordneten ersten Schienenpaare 1 sind Halterungen 6 angeordnet, mit denen jeweils eine schwenkbare Verbindung herstellbar ist.

Bei Betätigung der unten angeordneten zweiten Schienenpaare 2 erfolgt eine Längsverstellung sowohl des Verbindungselementes 3 als auch der daran befestigten oben angeordneten ersten Schienenpaare 1 mit den Halterungen 6 gegenüber dem Fahrzeugboden.

Bei Betätigung der oben angeordneten ersten Schienenpaare 1 erfolgt eine Längsverstellung sowohl der oberen Schienen 1.1 als auch der daran befestigten Halterungen 6 gegenüber dem Verbindungselement 3.

Werden beide Schienenpaare 1, 2 gleichzeitig und in gleicher Wirkrichtung betätigt, erfolgt eine Längsverstellung in einer Geschwindigkeit, die der Summe der Differenzgeschwindigkeiten zwischen den Schienen 1.1, 1.2 einerseits und den Schienen 2.1, 2.2 andererseits entspricht. Zum Einstellen der Komfortstellung aus der Fahrstellung heraus und umgekehrt ist dabei die Längsverstellung des Fahrzeugsitzes besonders schnell möglich.

Besonders vorteilhaft ist dies, weil eine Längsverstellung des Fahrzeugsitzes besonders schnell aus der Komfortstellung in die Fahrstellung ermöglicht ist, wenn beispielsweise eine fahrsituationsbedingte Beendigung eines autonomen Fahrens und ein Übernehmen der Fahrzeugsteuerung durch einen Fahrer erforderlich ist.

**Figur 2** zeigt schematisch eine zugehörige Draufsicht. Auf der Oberseite des rechts dargestellten Teils des Verbindungselements 3, welches das in Fahrtrichtung hintere Teil des Verbindungselements 3 ist, ist ein oberer Motor 4 befestigt, der dem Antrieb der oberen, also ersten Schienenpaare 1 dient, genauer dem Antrieb der oberen Schienen 1.1 gegenüber den korrespondierenden unteren Schienen 1.2.

An der Unterseite des links dargestellten Teils des Verbindungselements 3, welches das in Fahrtrichtung vordere Teil des Verbindungselements 3 ist, ist ein unterer Motor 5 befestigt, der dem Antrieb der unteren, also zweiten Schienenpaare 2 dient, genauer dem Antrieb der oberen Schienen 2.1 gegenüber den korrespondierenden unteren Schienen 2.2.

Am links dargestellten Teil des Verbindungselements 3 ist ein optionaler Retraktor dargestellt.

Zum Einstellen einer Komfortstellung aus der Fahrstellung heraus und umgekehrt ist dabei die Längsverstellung des Fahrzeugsitzes besonders schnell möglich, nämlich durch gleichzeitige Betätigung der Schienenpaare 1, 2 in gleicher Wirkrichtung.

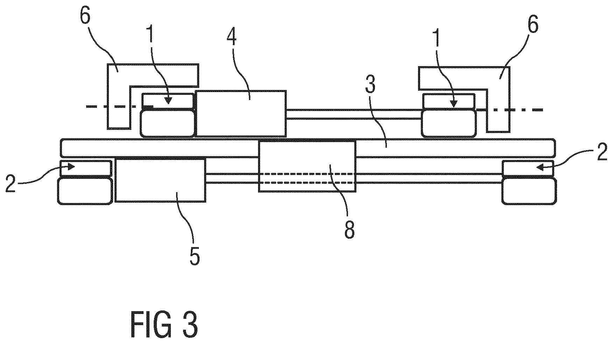

**Figur 3** zeigt den in den vorgenannten Figuren gezeigten Sitzverstellungsmechanismus schematisch in einer Ansicht von vorn.

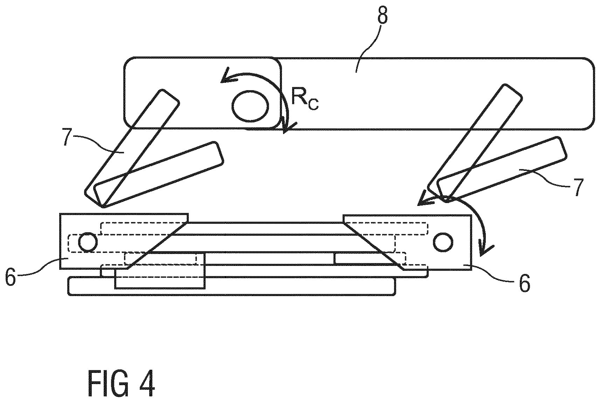

**Figur 4** zeigt schematisch die in Figur 1 dargestellte Erfindung mit einem höhenverstellbaren Sitzteil 8, welches mittels vier Schwenkhebeln 7 schwenkbar an den Halterungen 6 befestigt ist. Ein vorderer und ein hinterer Teil des Sitzteils 8 und eine am Sitzteil 8 befestigte, hier nicht gezeigte, Sitzlehne sind dabei optional zusätzlich, bevorzugt automatisch und/oder elektrisch, durch gegenseitige Verdrehung des vorderen und des hinteren Teil des Sitzteils 8 mittels einer horizontalen Schwenkachse Rc schwenkbar, beispielsweise um den Fahrzeugsitz von einer Fahrstellung in eine Komfortstellung und umgekehrt zu bringen oder um ihn in einer Fahrstellung oder in einer Komfortstellung bequem einzustellen. Bevorzugt ist der vordere Teil des Sitzteils 8 frontseitig schwenkbar befestigt und der hintere Teil des Sitzteils 8 rückseitig schwenkbar befestigt, sodass sich die horizontale Schwenkachse R_{C}, die die Verbindungsstelle zwischen vorderem Teil und hinterem Teil ist, beim Verdrehen des vorderen Teils gegenüber dem hinteren Teil nach oben oder unten bewegt.

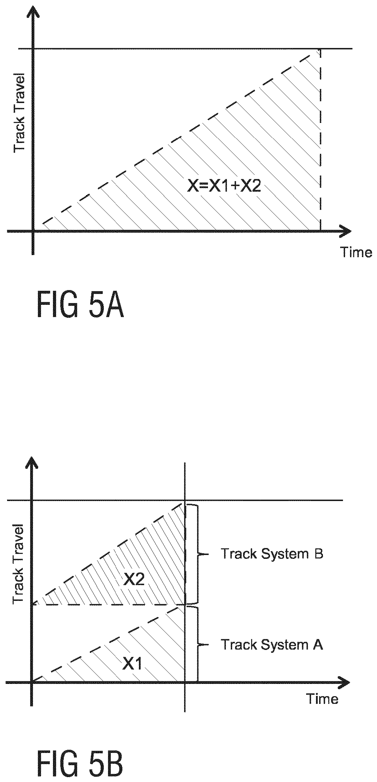

**Figur 5a** zeigt ein Diagramm mit einem zeitlichen Verlauf einer beispielsweise maximalen Längsverstellung des hier nicht gezeigten Fahrzeugsitzes entweder allein durch Betätigung der ersten Schienenpaare 1 oder allein durch Betätigung der zweiten Schienenpaare 2. Zum Erreichen einer bestimmten, beispielsweise maximalen Längsverstellung ist eine bestimmte Zeitdauer erforderlich.

**Figur 5b** zeigt ein Diagramm mit einem zeitlichen Verlauf einer beispielsweise maximalen Längsverstellung des hier nicht gezeigten Fahrzeugsitzes bei gleichzeitiger und in gleicher Wirkrichtung erfolgender Betätigung der ersten Schienenpaare 1 und der zweiten Schienenpaare 2. Zum Erreichen einer bestimmten, beispielsweise maximalen Längsverstellung ist eine Zeitdauer erforderlich, die deutlich geringer ist als die in Figur 5a gezeigte.

### Bezugszeichenliste

- 1: erste Schienenpaare
- 1.1: obere Schiene eines ersten Schienenpaares
- 1.2: untere Schiene eines ersten Schienenpaares
- 2: zweite Schienenpaare
- 2.1: obere Schiene eines zweiten Schienenpaares
- 2.2: untere Schiene eines zweiten Schienenpaares
- 3: Verbindungselement
- 4: erster Motor
- 5: zweiter Motor
- 6: Halterung
- 7: Schwenkhebel
- 8: Sitzteil
- R_{C}: Schwenkachse

## Patentansprüche

1. Sitzverstellungsmechanismus für einen Fahrzeugsitz, umfassend eine Anzahl erster oberer Schienenpaare (1), wobei jedes erste obere Schienenpaar (1) eine obere Schiene (1.1) und eine untere Schiene (1.2) umfasst, und eine Anzahl zweiter unterer Schienenpaare (2), welche eine im Wesentlichen gleiche Wirkrichtung in Längsrichtung wie die Anzahl erster oberer Schienenpaare (1) aufweist und wobei jedes zweite untere Schienenpaar (2) eine obere Schiene (2.1) und eine untere Schiene (2.2) umfasst, wobei zwischen der Anzahl erster oberer Schienenpaare (1) und der Anzahl zweiter unterer Schienenpaare (2) ein Verbindungselement (3) angeordnet ist, wobei die unteren Schienen (1.2) der Anzahl erster oberer Schienenpaare (1) oberseitig am Verbindungselement (3) befestigt und obere Schienen (2.1) der Anzahl zweiter unterer Schienenpaare (2) unterseitig am Verbindungselement (3) befestigt sind und am Verbindungselement (3) eine Anzahl von Motoren (4, 5) angeordnet ist, **dadurch gekennzeichnet, dass** ein erster Motor (4) zum elektrischen Antrieb der Anzahl erster oberer Schienenpaare (1) angeordnet ist und dass ein zweiter Motor (5) zum elektrischen Antrieb der Anzahl zweiter unterer Schienenpaare (2) angeordnet ist, wobei der erste Motor (4) oberseitig am Verbindungselement (3) angeordnet ist und der zweite Motor (5) unterseitig am Verbindungselement (3) angeordnet ist.

2. Sitzverstellungsmechanismus nach Anspruch 1, **dadurch gekennzeichnet, dass** das Verbindungselement (3) ein- oder mehrteilig ist.

3. Sitzverstellungsmechanismus nach Anspruch 1 oder 2, **dadurch gekennzeichnet, dass** das Verbindungselement (3) eine Motorbrücke ist.

4. Sitzverstellungsmechanismus nach einem der vorhergehenden Ansprüche, **dadurch gekennzeichnet, dass** an Enden der oberen Schienen (1.1) der Anzahl erster oberer Schienenpaare (1) Halterungen (6) zur Aufnahme jeweils eines Schwenkhebels (7) angeordnet sind.

5. Sitzverstellungsmechanismus nach Anspruch 4, **dadurch gekennzeichnet, dass** bei Betätigung der Anzahl zweiter unterer Schienenpaare (2) eine Längsverstellung sowohl des Verbindungselements (3) als auch der daran befestigten Anzahl erster oberer Schienenpaare (1) mit den Halterungen (6) gegenüber einem Fahrzeugboden erfolgt.

6. Sitzverstellungsmechanismus nach Anspruch 4 oder 5, **dadurch gekennzeichnet, dass** bei Betätigung der Anzahl erster oberer Schienenpaare (1) eine Längsverstellung sowohl der oberen Schienen (1.1) als auch der daran befestigten Halterung (6) gegenüber dem Verbindungselement (3) erfolgt.

7. Sitzverstellungsmechanismus nach einem der vorhergehenden Ansprüche, **dadurch gekennzeichnet, dass** die Anzahl erster oberer Schienenpaare (1) gleichzeitig mit der Anzahl zweiter unterer Schienenpaare (2) betätigbar ist.

8. Fahrzeugsitz, **gekennzeichnet durch** einen Sitzverstellungsmechanismus nach einem der vorhergehenden Ansprüche.

## Claims

1. Seat adjustment mechanism for a vehicle seat, comprising a number of first upper rail pairs (1), each first upper rail pair (1) comprising an upper rail (1.1) and a lower rail (1.2), and a number of second lower rail pairs (2) which have a substantially identical direction of action in the longitudinal direction as the number of first upper rail pairs (1), and each second lower rail pair (2) comprising an upper rail (2.1) and a lower rail (2.2), a connecting element (3) being arranged between the number of first upper rail pairs (1) and the number of second of second lower rail pairs (2), the lower rails (1.2) of the number of first upper rail pairs (1) being fastened on the upper side to the connecting element (3), and upper rails (2.1) of the number of second lower rail pairs (2) being fastened on the lower side to the connecting element (3), and a number of motors (4, 5) being arranged on the connecting element (3), **characterized in that** a first motor (4) is arranged for the electric drive of the number of first upper rail pairs (1), and **in that** a second motor (5) is arranged for the electric drive of the number of second lower rail pairs (2), the first motor (4) being arranged on the upper side on the connecting element (3), and the second motor (5) being arranged on the lower side on the connecting element (3).

2. Seat adjustment mechanism according to Claim 1, **characterized in that** the connecting element (3) is in one part or in multiple parts.

3. Seat adjustment mechanism according to Claim 1 or 2, **characterized in that** the connecting element (3) is a motor bridge.

4. Seat adjustment mechanism according to one of the preceding claims, **characterized in that** holders (6) for receiving in each case one pivoting lever (7) are arranged at ends of the upper rails (1.1) of the number of first upper rail pairs (1).

5. Seat adjustment mechanism according to Claim 4, **characterized in that**, upon actuation of the number of second lower rail pairs (2), a longitudinal adjustment takes place both of the connecting element (3) and of the number of first upper rail pairs (1) fastened to it with the holders (6) with respect to a vehicle floor.

6. Seat adjustment mechanism according to Claim 4 or 5, **characterized in that**, upon actuation of the number of first upper rail pairs (1), a longitudinal adjustment takes place both of the upper rails (1.1) and of the holder (6) fastened to it with respect to the connecting element (3).

7. Seat adjustment mechanism according to one of the preceding claims, **characterized in that** the number of first upper rail pairs (1) can be actuated at the same time as the number of second lower rail pairs (2).

8. Vehicle seat, **characterized by** a seat adjustment mechanism according to one of the preceding claims.

## Revendications

1. Mécanisme de réglage de siège pour un siège de véhicule, comprenant un nombre de premières paires de rails supérieures (1), chaque première paire de rails supérieure (1) comprenant un rail supérieur (1.1) et un rail inférieur (1.2), et un nombre de deuxièmes paires de rails inférieures (2), lequel présente une direction d'action dans la direction longitudinale sensiblement identique à celle du nombre de premières paires de rails supérieures (1) et chaque deuxième paire de rails inférieure (2) présentant un rail supérieur (2.1) et un rail inférieur (2.2), un élément de liaison (3) étant disposé entre le nombre de premières paires de rails supérieures (1) et le nombre de deuxièmes paires de rails inférieures (2), les rails inférieurs (1.2) du nombre de premières paires de rails supérieures (1) étant fixés à l'élément de liaison (3) du côté supérieur et les rails supérieurs (2.1) du nombre de deuxièmes paires de rails inférieures (2) étant fixés à l'élément de liaison (3) du côté inférieur et un nombre de moteurs (4, 5) étant disposé sur l'élément de liaison (3), **caractérisé en ce qu'**un premier moteur (4) est disposé pour l'entraînement électrique du nombre de premières paires de rails supérieures (1) et **en ce qu'**un deuxième moteur (5) est disposé pour l'entraînement électrique du nombre de deuxièmes paires de rails inférieures (2), le premier moteur (4) étant disposé sur l'élément de liaison (3) du côté supérieur et le deuxième moteur (5) étant disposé sur l'élément de liaison (3) du côté inférieur.

2. Mécanisme de réglage de siège selon la revendication 1, **caractérisé en ce que** l'élément de liaison (3) est en une partie ou en plusieurs parties.

3. Mécanisme de réglage de siège selon la revendication 1 ou 2, **caractérisé en ce que** l'élément de liaison (3) est un pont de moteur.

4. Mécanisme de réglage de siège selon l'une des revendications précédentes, **caractérisé en ce qu'**aux extrémités des rails supérieurs (1.1) du nombre de premières paires de rails supérieures (1) sont disposés des supports (6) servant à la réception d'un levier pivotant (7) respectivement.

5. Mécanisme de réglage de siège selon la revendication 4, **caractérisé en ce que**, lors de l'actionnement du nombre de deuxièmes paires de rails inférieures (2), un déplacement longitudinal, par rapport à un plancher du véhicule, à la fois de l'élément de liaison (3) et du nombre de premières paires de rails supérieures (1) fixé à celui-ci et comportant les supports (6) a lieu.

6. Mécanisme de réglage de siège selon la revendication 4 ou 5, **caractérisé en ce que**, lors de l'actionnement du nombre de premières paires de rails supérieures (1), un déplacement longitudinal, par rapport à l'élément de liaison (3), à la fois des rails supérieurs (1.1) et du support (6) fixé à ceux-ci a lieu.

7. Mécanisme de réglage de siège selon l'une des revendications précédentes, **caractérisé en ce que** le nombre de premières paires de rails supérieures (1) peut être actionné simultanément au nombre de deuxièmes paires de rails inférieures (2).

8. Siège de véhicule, **caractérisé par** un mécanisme de réglage de siège selon l'une des revendications précédentes.
